# EUROPÄISCHE PATENTSCHRIFT

(11) **EP 2 718 118 B1**
(45) Veröffentlichungstag und Bekanntmachung des Hinweises auf die Patenterteilung: **24.08.2016**
(21) Anmeldenummer: 12718136.0
(22) Anmeldetag: 19.04.2012
(51) Int. Cl.: B60C 11/24

(54) **FAHRZEUGLUFTREIFEN**
VEHICLE TIRE
PNEU DE VEHICULE

(30) Priorität: 08.06.2011 DE 102011050911
(43) Veröffentlichungstag der Anmeldung: 16.04.2014
(73) Patentinhaber: Continental Reifen Deutschland GmbH, 30165 Hannover (DE)
(72) Erfinder: TKOCZ, Tim, 30120 Braunschweig (DE); WUEST, Alexander, 30926 Seelze (DE); HOFFMANN, Jens, 40670 Meerbusch (DE); BOGENSCHÜTZ, Peter, 30900 Wedemark (DE)
(74) Vertreter: Finger, Karsten
(86) Internationale Anmeldenummer: PCT/EP2012/057157
(87) Internationale Veröffentlichungsnummer: WO 2012/167983

(56) Entgegenhaltungen:
- DE-A1- 3 627 833
- JP-U- 56 075 004
- US-A1- 2002 036 039

## Beschreibung

Die Erfindung betrifft einen Fahrzeugluftreifen mit einem Laufstreifen gemäß dem Oberbegriff des Anspruches 1.

Bei Fahrzeugluftreifen sind unterschiedliche Konzepte bekannt, die Profiltiefe infolge eines Laufstreifenabriebes zu überwachen. Bei einem der Konzepte wird ein sogenannter Abriebindikator am Profilgrund einer Umfangsrille angeordnet.

Bei diesem Abriebindikator handelt es sich um eine Erhebung am Profilgrund der Umfangsrille. Wenn diese Erhebung am Profilgrund das Höhenniveau der Laufstreifenoberfläche erreicht hat, wird damit die gesetzlich vorgeschriebene Mindestprofiltiefe angezeigt. Ein wesentlicher Nachteil bei diesem Abriebindikator besteht darin, dass der Fahrzeughalter die aktuelle Profiltiefe nur grob abschätzen kann. Außerdem tritt bei dieser Art von Abriebindikatoren das Risiko von Rissbildungen auf, die den Fahrzeugluftreifen beschädigen können.

Ein Fahrzeugluftreifen der eingangs genannten Art ist beispielsweise aus der US 2002/0036039 A1 bekannt. Diese Druckschrift offenbart unterschiedliche Ausführungsvarianten von Abriebindikatoren, die als sich in radialer Richtung des Laufstreifen erstreckende Einschnitte ausgebildet sind. Aus der DE 36 27 833 A1 ist ein Fahrzeugluftreifen mit einem Abriebindikator bekannt, welcher aus einem Einschnitt gebildet wird, der von einer Umfangsnut ausgeht. Dieser Einschnitt weist eine Seitenfläche auf, die in Bezug auf die Lauffläche des Laufstreifens unter einem Winkel von 30 ° bis 60 ° ansteigt. Die JP 56 075004 U offenbart einen Fahrzeugluftreifen mit Abriebindikatoren, die seitlich von Umfangsnuten ausgebildete Ausnehmungen sind, die in radialer Richtung stufenförmig strukturierte Wände aufweisen.

Der Erfindung liegt die Aufgabe zu Grunde, bei einem Fahrzeugluftreifen den Abriebindikator so zu gestalten, dass zu jedem Zeitpunkt die Profiltiefe auf einfache Weise ablesbar ist.

Gelöst wird die Aufgabe gemäß den kennzeichnenden Merkmalen von Anspruch 1 dadurch, dass Abriebindikator entweder auf den beiden gegenüberliegenden Enden des Einschnittes senkrecht angeordnete Begrenzungseinschnitte oder in geringen, insbesondere gleich großen Abständen von den beiden Enden des Einschnittes im Laufstreifen kleine Löcher aufweist, wobei die Begrenzungseinschnitte bzw. die Löcher senkrecht zur Laufstreifenoberfläche ausgerichtet sind und ihre Tiefe der Profiltiefe des Fahrzeugluftreifens entspricht.

Ein Vorteil des erfindungsgemäßen Abriebindikators besteht darin, dass die noch verbleibende Profiltiefe zu jedem Zeitpunkt auf einfache Weise von dem Fahrzeughalter abgelesen werden kann. Die entsprechende Längenabmessung des Abriebindikators ist zu jeder Zeit an der Laufstreifenoberfläche sichtbar und zeigt exakt die noch verbleibende Profiltiefe an. Es ist daher nicht mehr erforderlich, dass der Fahrzeughalter mit einem Profiltiefenmessgerät die Profiltiefe an einer Stelle von einer Umfangsrille nachmessen muss. Über einen vorgegebenen Faktor lässt sich der Abriebindikator auf einfache Weise dem zur Verfügung stehenden Profilvolumen anpassen. Wenn an der entsprechenden Stelle im Reifenprofil nur wenig Raum zur Verfügung steht, sollte ein Faktor von größer als 1, beispielsweise von 2, gewählt werden. Dadurch kann der Abriebindikator platzsparend im Reifenprofil angeordnet werden.

Mit Begrenzungseinschnitten oder Löchern wird die Ablesbarkeit wesentlich erhöht. Es ist dann ebenfalls einfach feststellbar, wie hoch der bisherige Laufstreifenabrieb war. Ein weiterer entscheidender Vorteil liegt darin, dass bei Erreichen der Mindestprofiltiefe zumindest diese Begrenzungseinschnitte bzw. Löcher sichtbar bleiben können. Der Fahrzeughalter erhält damit die Anzeige, dass er den Fahrzeugluftreifen umgehend austauschen sollte.

In einer vorteilhaften Weiterbildung der Erfindung ist vorgesehen, dass der Faktor ein Halb, eins oder zwei beträgt.

Bei einem Faktor von 1 ist gar keine Umrechnung mehr erforderlich. Die Längenabmessung des Abriebindikators zeigt direkt die noch verbleibende Profiltiefe an. Bei einem Faktor von 0,5 ist die Längenabmessung des Abriebindikators vergrößert. Dadurch lässt sich die verbleibende Profiltiefe genauer ablesen. Würde beispielsweise die Längenabmessung des Abriebindikators 20 mm betragen, dann beträgt bei einem Faktor von 0,5 die noch verbleibende Profiltiefe ca. 10 mm. Bei einem Faktor von 2 wird hingegen die noch verbleibende Profiltiefe entsprechend verkleinert angezeigt.

In einer weiteren vorteilhaften Weiterbildung der Erfindung ist vorgesehen, dass der Abriebindikator mit einer Lamelle zum Vulkanisieren von Fahrzeugreifen in den unvulkanisierten Fahrzeugreifen eingeformt wird. Auf diese Weise lassen sich die Abriebindikatoren mit einer hohen Abmessungsgenauigkeit in den Laufstreifen einformen.

In einer weiteren vorteilhaften Weiterbildung der Erfindung ist vorgesehen, dass die Länge des Einschnittes die Restprofiltiefe anzeigt, wobei von der angezeigten Länge des Einschnittes bereits die vorgeschriebene Mindestprofiltiefe abgezogen ist. Dadurch wird nicht die gesamte Profiltiefe bis zum Profilgrund der Umfangsrillen angezeigt. Die angezeigte Profiltiefe berücksichtigt somit bereits die vorgeschriebene gesetzliche Mindestprofiltiefe, die der Fahrzeughalter nicht noch einmal von dem angezeigten Wert abziehen muss.

In einer weiteren vorteilhaften Weiterbildung der Erfindung ist vorgesehen, dass eine erste Seite des dreieckförmigen Einschnittes im Wesentlichen senkrecht zur Laufstreifenoberfläche ausgerichtet ist, wobei die zweite gegenüberliegende Seite in einem spitzen Winkel von 22,5°, 45° oder 67,5° zu der ersten Seite ausgerichtet ist. Dadurch lässt sich die Längenabmessung des Abriebindikators einfach ablesen. Entsprechend geformte Einschnitte lassen sich außerdem mit einer hohen Genauigkeit in den Laufstreifen einformen. Durch die Winkelwerte wird ebenfalls die Ablesbarkeit vereinfacht, da bei diesen Werten der Faktor bei etwa 0,5, 1 oder 2 liegt.

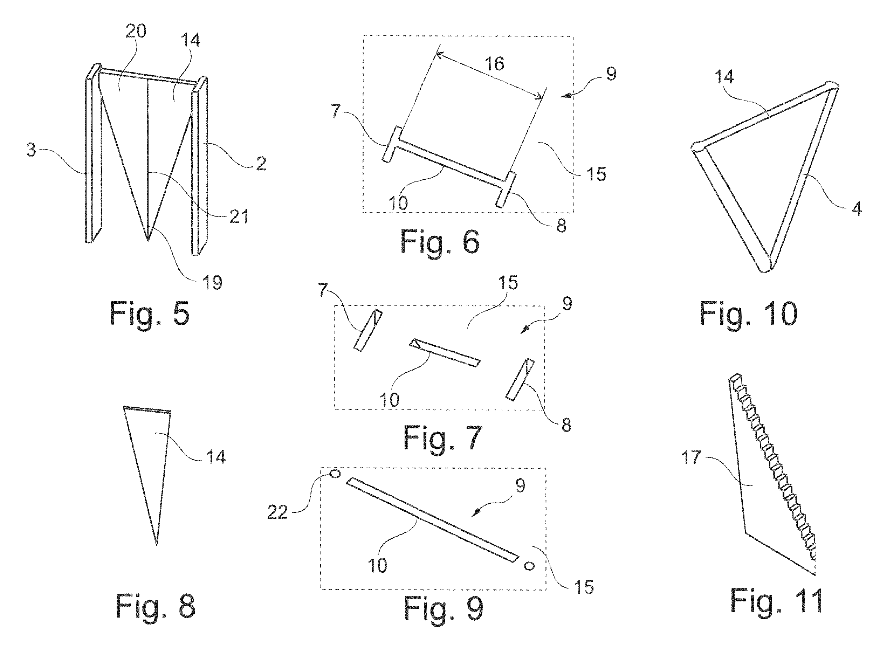

In einer weiteren vorteilhaften Weiterbildung der Erfindung ist vorgesehen, dass der durch die Lamelle geformte Einschnitt dreieckförmig ist, wobei die obere Seite und die Tiefenabmessung der Lamelle im Wesentlichen gleich lang sind. Ein entsprechendes Ausführungsbeispiel ist in Fig. 5 gezeigt. Derartige Einschnitte lassen sich relativ einfach in den Laufstreifen einformen.

In einer weiteren vorteilhaften Weiterbildung der Erfindung ist vorgesehen, dass die Einschnitte in den Randbereichen Rundungen aufweisen, die durch Rundungen an den Randbereichen der Lamellen in den Laufstreifen eingeformt werden.

Durch die Rundungen wird die Gefahr einer Rissbildung reduziert. Außerdem wird der Ausformvorgang zum Einformen der Abriebindikatoren durch die Rundungen an den Lamellen wesentlich vereinfacht.

In einer weiteren vorteilhaften Weiterbildung der Erfindung ist vorgesehen, dass die Dicke der Einschnitte zwischen 0,5 und 2 mm, vorzugsweise 0,8 bis 1,5 mm, beträgt. Dadurch lassen sich die Einschnitte des Abriebindikators mit einer hohen Abmessungsgenauigkeit in den Laufstreifen einformen, wobei gleichzeitig eine gute Ablesbarkeit gewährleistet wird.

In einer weiteren vorteilhaften Weiterbildung der Erfindung ist vorgesehen, dass der Durchmesser der Rundungen die Summe aus der Dicke der Einschnitte und einer Zusatzlänge von 0,5 bis 2 mm beträgt.
Dadurch wird das Risiko einer Rissbildung minimiert und die Ablesbarkeit der Längenabmessung verbessert.

In einer weiteren vorteilhaften Weiterbildung der Erfindung ist vorgesehen, dass die Randbereiche des Einschnittes stufenförmig ausgebildet sind.

Diese stufenförmige Ausbildung könnte beispielsweise in Millimeterschritten erfolgen. Sie vereinfacht die Ablesbarkeit der Längenabmessung.
In einer weiteren vorteilhaften Weiterbildung der Erfindung ist vorgesehen, dass der Fahrzeugluftreifen ein Nutzfahrzeugreifen ist, wobei die Profiltiefe im Laufstreifen zwischen 10 und 25 mm beträgt.

Die Profiltiefe ist bei Nutzfahrzeugreifen im allgemeinen tiefer als bei PKW-Reifen. Der erfindungsgemäße Abriebindikator lässt sich daher bei Nutzfahrzeugreifen besonders vorteilhaft einsetzen.
Anhand eines Ausführungsbeispiels soll die Erfindung erläutert werden. Es zeigen:
Fig. 1 Ein Ausführungsbeispiel eines erfindungsgemäßen Abriebindikators,
Fig. 2 bis 4 den Abriebindikator im Laufstreifen in unterschiedlichen Zuständen,
Fig. 5, 6, 7 und 9 ein weiteres Ausführungsbeispiel des Abriebindikators,
Fig. 8 und 10 weitere Beispiele, die nicht zum Gegenstand der beanspruchten Erfindung gehören.
Fig. 11 die stufenförmige Ausbildung im Randbereich des Einschnitts, die nicht zum Gegenstand der beanspruchten Erfindung gehört.

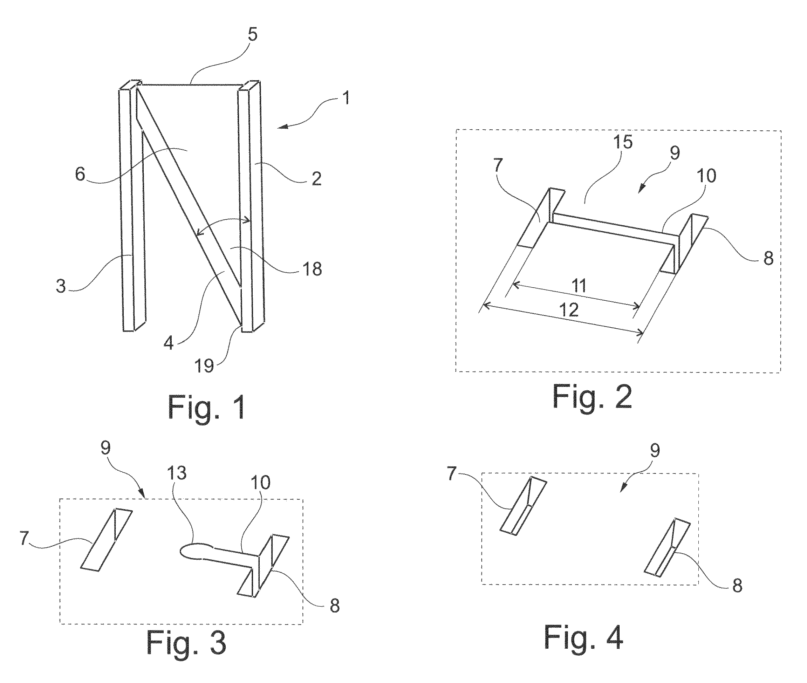

Fig. 1 zeigt die Lamelle 1 zum Einformen des Abriebindikators. Sie ist auf der oberen Lamellenseite 5 an eine Vulkanisationsform angebunden, die das Reifenprofil in den unvulkanisierten Laufstreifen einprägt. Mit dem Lamellenteil 6 wird der Einschnitt des Abriebindikators eingeformt. Die Lamellenseiten 2 und 3 haben die Funktion, die entsprechenden Begrenzungseinschnitte des Abriebindikators einzuformen. Sie reichen in Hinblick auf die Tiefe bis zum Profilgrund des Höhenniveaus der Umfangsrillen. Die Rundung 4 an der Lamelle 1 bietet unter anderem den Vorteil, dass der Ausformvorgang nach der Vulkanisation wesentlich vereinfacht wird. Mit Fig. 1 wird ebenfalls der erfindungsgemäße Abriebindikator als dreidimensionale Aussparung im Laufstreifen dargestellt.

Fig. 2 zeigt den Abriebindikator 9 in der Aufsicht auf den Laufstreifen, wobei mit dem Bezugszeichen 15 die Laufstreifenoberfläche dargestellt ist. Der Abriebindikator 9 umfasst einen linken und rechten Begrenzungseinschnitt 7 und 8, die entsprechend zu den Lamellenseiten 2 und 3 in Fig. 1 ausgebildet sind. Die Länge der Begrenzungseinschnitte 7 und 8 beträgt zwischen 3 und 12 mm. Zwischen diesen Begrenzungseinschnitten 7 und 8 ist der Einschnitt 10 dargestellt, der die Längenabmessung des Abriebindikators darstellt. Die Längenabmessung 11 des Einschnittes 10 gibt exakt die Profiltiefe des Laufstreifens wieder. Denkbar ist ebenfalls, dass die Längenabmessung 12 als Maß für die Profiltiefe verwendet wird. Bei diesem Ausführungsbeispiel müsste die Längenabmessung mit dem Faktor 2 multipliziert werden, um die noch verbleibende Profiltiefe zu ermitteln. Wie in Fig. 1 dargestellt, beträgt der spitze Winkel 18 bei diesem Ausführungsbeispiel in etwa 22,5°.

Fig. 3 zeigt den Abriebindikator 9 in einem Zustand, bei dem bereits ein bestimmter Laufstreifenabrieb erfolgt ist. Die Längenabmessung des Einschnittes 10 hat sich daher entsprechend verkleinert. Über die Begrenzungseinschnitte 7 und 8 lässt sich ebenfalls ermitteln, wie hoch der Laufstreifenabrieb bislang war. Dieser Laufstreifenabrieb wird durch den Abstand der Rundung 13 zum linken Begrenzungseinschnitt 7 wiedergegeben. Bei einer Profiltiefe von 20 mm wäre somit ein Laufstreifenabrieb von etwa 10 mm erfolgt.

Fig. 4 zeigt den Zustand des Abriebindikators 9, bei dem bereits die Mindestprofiltiefe erreicht wurde. Es sind nur noch die Begrenzungseinschnitte 7 und 8 zu sehen. Der Fahrzeughalter würde damit den Hinweis erhalten, dass die Mindestprofiltiefe erreicht ist und der entsprechende Fahrzeugluftreifen ausgetauscht werden muss.

Fig. 5 zeigt ein zweites Ausführungsbeispiel mit einer dreieckförmigen Lamelle mit gleich langen Seiten zum Einformen eines dreieckförmigen Einschnittes. Die Lamelle 14 weist ebenfalls zwei Lamellenseiten 2 und 3 auf, die zum Einformen der Begrenzungseinschnitte dienen. Fig. 5 zeigt außerdem den dreieckförmigen Einschnitt mit den Begrenzungseinschnitten als dreidimensionale Aussparung im Laufstreifen.

Fig. 6 zeigt den Abriebindikator 9, der mit einer Lamelle 14 in den Laufstreifen eingeformt wurde. Der Abriebindikator umfasst einen linken und einen rechten Begrenzungseinschnitt 7 und 8. Zwischen diesen Begrenzungseinschnitten 7 und 8 ist der Einschnitt 10 angeordnet, der in der Seitenansicht dreieckförmig ausgebildet ist. Die Längenabmessung 16 des Einschnittes 10 gibt wiederum direkt die Profiltiefe des Laufstreifens wieder.

Fig. 7 zeigt den Abriebindikator 9 in einem Zustand, bei dem bereits ein Laufstreifenabrieb erfolgt ist. Die Längenabmessung des Einschnittes 10 hat sich dabei entsprechend verkleinert. Bei diesem Ausführungsbeispiel zeigt die Längenabmessung direkt die noch verbleibende Profiltiefe an. Durch die beiden Begrenzungseinschnitte 7 und 8 ist ebenfalls auf einfache Weise der bereits erfolgte Laufstreifenabrieb ermittelbar.

Fig. 8 zeigt ein weiteres Beispiel, das nicht zum Gegenstand der beanspruchten Erfindung gehört, mit einer dreieckförmigen Lamelle 14. Bei diesem Ausführungsbeispiel fehlen die Lamellen zum Einformen der Begrenzungseinschnitte.

Fig. 9 zeigt den Abriebindikator 9, der mit der Lamelle 14 aus Fig. 8 in den Laufstreifen eingeformt wurde. Bei diesem Abriebindikator 9 fehlen die Begrenzungseinschnitte. Bei einer Variante diese Ausführungsform können, wie ebenfalls Fig. 9 zeigt, in geringen, insbesondere gleich großen Abständen von den beiden Enden des Einschnittes 10 und in Positionen in Verlängerung des Einschnittverlaufes im Laufstreifen kleine Löcher 22 ausgebildet sein, deren Durchmesser beispielsweise zwischen 0,5 mm und 2 mm beträgt. Die Löcher 22 verlaufen im Laufstreifen in radialer Richtung, vorzugsweise bis auf die maximal vorgesehene Profiltiefe. Analog zu den Begrenzungseinschnitten der vorherigen Ausführungsvarianten kann daher der gegenseitige Abstand der Löcher 22 gemeinsam mit der Länge des Einschnittes 10 ebenfalls zur Ermittlung des bereits erfolgten Abriebes herangezogen werden. Die beiden Löcher 22 können mittels in der Vulkanisationsform verankerten Stiften im Laufstreifen hergestellt werden.

Fig. 10 zeigt eine dreieckförmige Lamelle 14, bei der die Randbereiche mit Rundungen 4 versehen sind, die nicht zum Gegenstand der beanspruchten Erfindung gehört.

Fig. 11 zeigt ein weiteres Beispiel, das nicht zum Gegenstand der beanspruchten Erfindung gehört, einer Lamelle 17 mit einem stufenförmigen Randbereich. Dadurch werden im Randbereich der Einschnitte des Abriebindikators entsprechende Stufen eingeformt. Die Stufen könnten beispielsweise in Form von Millimeterschritten ausgebildet sein.

### Bezugszeichenliste

- 1: Lamelle zum Einformen des Abriebindikators
- 2: Lamellenseiten zum Einformen der Begrenzungseinschnitte
- 3: Lamellenseiten zum Einformen der Begrenzungseinschnitte
- 4: Rundungen an der Lamelle
- 5: obere Lamellenseite, die an die Vulkanisationsform angebunden ist
- 6: Lamellenteil zum Einformen des Einschnittes
- 7: linker Begrenzungseinschnitt
- 8: rechter Begrenzungseinschnitt
- 9: Abriebindikator im Laufstreifen
- 10: Einschitt
- 11: Längenabmessung des Abriebindikators zwischen den Begrenzungseinschnitten
- 12: Längenabmessung des Abriebindikators mit den Begrenzungseinschnitten
- 13: Rundung an dem Einschnitt
- 14: dreieckförmige Lamelle zum Einformen eines dreieckförmigen Einschnittes mit gleichlangen Seiten
- 15: Laufstreifenoberfläche
- 16: Längenabmessung des Abriebindikators
- 17: Lamelle mit stufenförmigen Randbereich
- 18: spitzer Winkel des dreieckförmigen Einschnittes
- 19: Spitze des Abriebindikators
- 20: obere Seite der Lamelle
- 21: Tiefenabmessung der Lamelle
- 22: Loch

## Patentansprüche

1. Fahrzeugluftreifen mit einem Laufstreifen, *in welchem* zumindest ein Abriebindikator (9) angeordnet ist, *welcher* einen in den Laufstreifen hineinreichenden *Einschnitt (10)* umfasst, welcher sich mit einem zunehmenden Laufstreifenabrieb optisch verändert, wobei der Laufstreifenabrieb eine Längenabmessung (11, 12, 16) *des Einschnittes (10)* beeinflusst, wobei der *Einschnitt (10)* im Laufstreifen im Wesentlichen dreieckförmig mit einer unteren Spitze (19) ausgebildet ist und in einer Ausbreitungsebene im Wesentlichen senkrecht zur Laufstreifen-Oberfläche (15) angeordnet ist und über die Längenabmessung (11, 12, 16) des Abriebindikators (9) zu jedem Zeitpunkt die noch verbleibende Profiltiefe im Laufstreifen feststellbar ist, *welche* sich im Wesentlichen aus dem Produkt eines vorgegebenen Faktors mit der Längenabmessung (11, 12, 16) des Abriebindikators (9) berechnet,
**dadurch gekennzeichnet, dass**
der *Abriebindikator (9) entweder auf den beiden gegenüberliegenden Enden des Einschnittes (10) senkrecht angeordnete Begrenzungseinschnitte (7, 8) oder in geringen, insbesondere gleich großen Abständen von den beiden Enden des Einschnittes (10) im Laufstreifen kleine Löcher (22) aufweist, wobei die Begrenzungseinschnitte (7, 8) bzw. die Löcher (22) senkrecht zur Laufstreifenoberfläche (15) ausgerichtet sind und ihre Tiefe der Profiltiefe des Fahrzeugluftreifens entspricht.*

2. Fahrzeugluftreifen nach Anspruch 1,
**dadurch gekennzeichnet, dass**
der *vorgegebene Faktor ein Halb, eins oder zwei* beträgt.

3. Fahrzeugluftreifen nach einem der vorhergehenden Ansprüche
**dadurch gekennzeichnet, dass**
der Abriebindikator (9) mit einer Lamelle (1, 14) zum Vulkanisieren von Fahrzeugreifen in den unvulkanisierten Fahrzeugreifen eingeformt wird.

4. Fahrzeugluftreifen nach einem der vorhergehenden Ansprüche
**dadurch gekennzeichnet, dass**
die Länge des Einschnittes (10) die Restprofiltiefe anzeigt,
wobei von der angezeigten Länge (11, 12, 16) des Einschnittes (10) bereits die vorgeschriebene Mindestprofiltiefe abgezogen ist.

5. Fahrzeugluftreifen nach einem der vorhergehenden Ansprüche
**dadurch gekennzeichnet, dass**
eine erste Seite (2, 8) des dreieckförmigen Einschnittes im Wesentlichen senkrecht zur Laufstreifenoberfläche (15) ausgerichtet ist,
wobei die zweite gegenüberliegende Seite (4) in einem spitzen Winkel (18) von 22,5°, 45° oder 67,5° zu der ersten Seite ausgerichtet ist.

6. Fahrzeugluftreifen nach einem der vorhergehenden Ansprüche
**dadurch gekennzeichnet, dass**
der durch die Lamelle (14) geformte Einschnitt (10) dreieckförmig ist, wobei die obere Seite (20) und die Tiefenabmessung (21) der Lamelle (14) im Wesentlichen gleich lang sind.

7. Fahrzeugluftreifen nach einem der vorhergehenden Ansprüche
**dadurch gekennzeichnet, dass**
die Einschnitte (10) in den Randbereichen Rundungen aufweisen, die durch Rundungen (4) an den Randbereichen der Lamellen (1, 14) in den Laufstreifen eingeformt werden.

8. Fahrzeugluftreifen nach einem der vorhergehenden Ansprüche
**dadurch gekennzeichnet, dass**
die Dicke der Einschnitte (10) zwischen 0,5 und 2 mm, vorzugsweise 0,8 bis 1,5 mm, beträgt.

9. Fahrzeugluftreifen nach einem der vorhergehenden Ansprüche
**dadurch gekennzeichnet, dass**
der Durchmesser der Rundungen (13) die Summe aus der Dicke der Einschnitte (10) und einer Zusatzlänge von 0,5 bis 2 mm beträgt.

10. Fahrzeugluftreifen nach einem der vorhergehenden Ansprüche
**dadurch gekennzeichnet, dass**
die Randbereiche des Einschnittes (10) stufenförmig ausgebildet sind.

11. Fahrzeugluftreifen nach einem der vorhergehenden Ansprüche
**dadurch gekennzeichnet, dass**
der Fahrzeugluftreifen ein Nutzfahrzeugreifen ist,
wobei die Profiltiefe im Laufstreifen zwischen 10 und 25 mm beträgt.

## Claims

1. Pneumatic vehicle tyre having a tread in which there is arranged at least one wear indicator (9) which comprises a notch (10) which extends into the tread, which notch visually changes with progressive tread wear, wherein the tread wear influences a length dimension (11, 12, 16) of the notch (10), wherein the notch (10) in the tread is of substantially triangular form with a lower tip (19) and is arranged in a propagation plane substantially perpendicular to the tread surface (15), and, by way of the length dimension (11, 12, 16) of the wear indicator (9), it is possible at all times to ascertain the remaining profile depth in the tread, which is calculated substantially from the product of a predefined factor with the length dimension (11, 12, 16) of the wear indicator (9),
**characterized in that**
the wear indicator (9) either has vertically arranged delimiting notches (7, 8) arranged on the two opposite ends of the notch (10) or has small holes (22) at small, in particular equal distances from the two ends of the notch (10) in the tread, wherein the delimiting notches (7, 8) or the holes (22) are oriented perpendicular to the tread surface (15), and the depth thereof corresponds to the profile depth of the pneumatic vehicle tyre.

2. Pneumatic vehicle tyre according to Claim 1,
**characterized in that**
the predefined factor is one half, one or two.

3. Pneumatic vehicle tyre according to one of the preceding claims,
**characterized in that**
the wear indicator (9) is formed into the non-vulcanized vehicle tyre by way of a lamella (1, 14) for the vulcanization of vehicle tyres.

4. Pneumatic vehicle tyre according to one of the preceding claims,
**characterized in that**
the length of the notch (10) indicates the remaining profile depth,
wherein the prescribed minimum profile depth has already been extracted from the indicated length (11, 12, 16) of the notch (10).

5. Pneumatic vehicle tyre according to one of the preceding claims,
**characterized in that**
a first side (2, 8) of the triangular notch is oriented substantially perpendicular to the tread surface (15),
wherein the second, opposite side (4) is oriented at an acute angle (18) of 22.5°, 45° or 67.5° with respect to the first side.

6. Pneumatic vehicle tyre according to one of the preceding claims,
**characterized in that**
the notch (10) formed by the lamella (14) is triangular, wherein the top side (20) and the depth dimension (21) of the lamella (14) are of substantially equal length.

7. Pneumatic vehicle tyre according to one of the preceding claims,
**characterized in that**
the notches (10) have rounded portions in the edge regions, which rounded portions are formed into the tread by rounded portions (4) on the edge regions of the lamellae (1, 14).

8. Pneumatic vehicle tyre according to one of the preceding claims,
**characterized in that**
the thickness of the notches (10) amounts to between 0.5 mm and 2 mm, preferably 0.8 mm to 1.5 mm.

9. Pneumatic vehicle tyre according to one of the preceding claims,
**characterized in that**
the diameter of the rounded portions (13) amounts to the sum of the thickness of the notches (10) and an additional length of 0.5 to 2 mm.

10. Pneumatic vehicle tyre according to one of the preceding claims,
**characterized in that**
the edge regions of the notch (10) are of stepped form.

11. Pneumatic vehicle tyre according to one of the preceding claims,
**characterized in that**
the pneumatic vehicle tyre is a utility vehicle tyre,
wherein the profile depth in the tread amounts to between 10 and 25 mm.

## Revendications

1. Pneumatique de véhicule avec une bande de roulement dans laquelle au moins un indicateur d'usure (9) est disposé, ledit indicateur comprenant une entaille (10) rentrant dans la bande de roulement s'altérant visuellement à mesure que l'usure de la bande de roulement augmente, l'usure de bande de roulement influençant une dimension de longueur (11, 12, 16) de l'entaille (10), l'entaille (10) étant réalisée dans la bande de roulement pour l'essentiel en forme de triangle avec une pointe inférieure (19) et étant disposée dans un plan d'élargissement pour l'essentiel perpendiculairement à la surface de bande de roulement (15) et la profondeur de profil encore restante dans la bande de roulement pouvant être détectée à tout instant sur toute la dimension de longueur (11, 12, 16) de l'indicateur d'usure (9), ladite profondeur se calculant pour l'essentiel à partir du produit d'un facteur prédéfini par la dimension de longueur (11, 12, 16) de l'indicateur d'usure (9), **caractérisé en ce que** l'indicateur d'usure (9) comporte soit des entailles de délimitation (7, 8) disposées perpendiculairement sur les deux extrémités opposées de l'entaille (10) soit des petits trous (22) placés à des distances réduites, notamment identiques, par rapport aux deux extrémités de l'entaille (10) dans la bande de roulement, les entailles de délimitation (7, 8) et/ou les trous (22) étant orientés perpendiculairement à la surface de bande de roulement (15) et leur profondeur correspondant à la profondeur de profil du pneumatique de véhicule.

2. Pneumatique de véhicule selon la revendication 1, **caractérisé en ce que** le facteur prédéfini est une moitié, un ou deux.

3. Pneumatique de véhicule selon l'une quelconque des revendications précédentes, **caractérisé en ce que** l'indicateur d'usure (9) est intégré avec une lamelle (1, 14) dans le pneumatique de véhicule non vulcanisé pour vulcaniser le pneumatique de véhicule.

4. Pneumatique de véhicule selon l'une quelconque des revendications précédentes, **caractérisé en ce que** la longueur de l'entaille (10) indique la profondeur de profil restante, la profondeur de profil minimale prescrite étant déjà retirée de la longueur (11, 12, 16) indiquée de l'entaille (10).

5. Pneumatique de véhicule selon l'une quelconque des revendications précédentes, **caractérisé en ce qu'**un premier côté (2, 8) de l'entaille en forme de triangle est orienté pour l'essentiel perpendiculairement à la surface de bande de roulement (15), le deuxième côté (4) opposé étant orienté selon un angle (18) aigu de 22,5°, 45° ou 67,5° par rapport au premier côté.

6. Pneumatique de véhicule selon l'une quelconque des revendications précédentes, **caractérisé en ce que** l'entaille (10) formée par la lamelle (14) est en forme de triangle, le côté supérieur (20) et la dimension de profondeur (21) de la lamelle (14) étant pour l'essentiel de même longueur.

7. Pneumatique de véhicule selon l'une quelconque des revendications précédentes, **caractérisé en ce que** les entailles (10) comportent des arrondis dans les zones de bordure insérées dans la bande de roulement à travers les arrondis (4) réalisés au niveau des zones de bordure des lamelles (1, 14).

8. Pneumatique de véhicule selon l'une quelconque des revendications précédentes, **caractérisé en ce que** l'épaisseur des entailles (10) est comprise entre 0,5 et 2 mm, de préférence de 0,8 à 1,5 mm.

9. Pneumatique de véhicule selon l'une quelconque des revendications précédentes, **caractérisé en ce que** le diamètre des arrondis (13) correspond à la somme de l'épaisseur de l'entaille (10) et d'une longueur supplémentaire de 0,5 à 2 mm.

10. Pneumatique de véhicule selon l'une quelconque des revendications précédentes, **caractérisé en ce que** les zones de bordure de l'entaille (10) sont réalisées selon une forme étagée.

11. Pneumatique de véhicule selon l'une quelconque des revendications précédentes, **caractérisé en ce que** le pneumatique de véhicule est un pneumatique de véhicule utilitaire, la profondeur de profil étant comprise entre 10 et 25 mm dans la bande de roulement.
